# EUROPEAN PATENT APPLICATION

(11) **EP 1 036 939 A1**
(43) Date of publication of application: **20.09.2000**
(21) Application number: 00104567.3
(22) Date of filing: 13.03.2000
(51) Int. Cl.: F04B 27/10, B23K 20/12

(54) **Method for forming a film on machine parts**

(30) Priority: 17.03.1999 JP 7226399
(71) Applicant: Kabushiki Kaisha Toyoda Jidoshokki Seisakusho, Aichi-ken 448-8671 (JP)
(72) Inventor: Sugiura, Manabu, Kariya-shi, Aichi-ken, 448-8671 (JP); Iwama, Kazuaki, Kariya-shi, Aichi-ken, 448-8671 (JP); Hirayama, Seizo, Kariya-shi, Aichi-ken, 448-8671 (JP); Suzaki, Seiji, Kitasaki-cho, Ohbu-shi, Aichi (JP)
(74) Representative: Hoeger, Stellrecht & Partner

(57) **Abstract**

The present invention provides a method of forming a film excellent in general applicability as a technology for forming a metallic material film on the worked surface of a machine part, and capable of maintaining an excellent working environment at working sites, saving labor and time of working and effectively cutting the cost.

A supply 40 formed from a metallic material softer than a worked surface 30B of a swash plate 10, regarded as a machine part, is prepared. While the annular worked surface 30B of the swash plate 10 and an annular end 41 of the supply 40 are in a state of being separated and opposed, the swash plate 10 alone is rotated to produce a relative rotation between the supply 40 and the swash plate. Part of the metallic material is transferred to the swash plate 10 from the supply 40 to form a film on the worked surface 30B by pressure welding, for a predetermined time, the end 41 of the supply to the worked surface 30B of the swash plate, the rotation of which is maintained.

## Description

### BACKGROUND OF THE INVENTION

### 1. Field of the Invention

The present invention relates to a method of forming, on worked surfaces of machine parts, films formed from a metallic material which is softer than the worked surface. In particular, the present invention relates to a method of forming, on the surface of a swash plate used in a swash plate type of compressor, a film for improving the contact slidability with shoes.

### 2. Description of the Related Art

The lubrication between sliding members forming the internal mechanism of a swash plate type of compressor is usually achieved by atomizing lubricating oil held within the compressor in a gas (e.g., a coolant gas such as a freon gas) which flows therewithin as the compressor is operated and carries the atomized oil to each of the sliding portions. However, when the compressor is left in a shutdown state for a long time and then restarted, the lubricating oil adhering to the sliding portions is often washed away by the coolant gas. As a result, the period (about 1 minute) from the start of the compressor to the return of the coolant gas thereto to advance the atomization of the oil is a period for which the sliding portions requiring lubrication become deficient in the lubricating oil in spite of the operation thereof. Accordingly, in order to ensure minimum lubricity on the sliding portions, even in a period for which the lubricating oil becomes insufficient, technologies for forming coatings (forming films) on the surfaces of various sliding members have heretofore been proposed. Even when the technologies are limited to those for forming a coating on the surface of a swash plate (specifically, the sliding surface in contact with shoes) of a swash plate type of compressor, there are various modes. The coating technologies disclosed in patent documents and those which have commonly realized in products (swash plates) include electrolytic or electroless plating of tin, etc., and thermal spraying of copper series or aluminum series of alloys, etc.

### BRIEF DESCRIPTION OF THE DRAWING

Fig. 1 shows a longitudinal sectional view of a volume-variable swash plate type of compressor.
Fig. 2a shows a front view of the rear surface of a swash plate to which a part of a supply such a raw material is applied.
Fig. 2b shows a perspective view of the whole of the supply.
Fig. 3 is a schematic view showing a film-forming apparatus.
Fig. 4 is a graph showing a change in conditions for forming a film with time.
Fig. 5 is an expanded sectional view showing the neighborhood of the peripheral portion of a swash plate in contact with shoes.

### SUMMARY OF THE INVENTION

However, although there is no difficulty in forming an extremely thin film, having a thickness of about several micrometers, by electrolytic or electroless plating of tin, etc., it is not always easy to form a film having a comparatively large thickness of at least several tens of micrometers. Moreover, the plating procedures are those which cannot always be adopted because realization of plating requires consideration of the electrochemical relationship between a base material metal and a plated adhering metal.

On the other hand, according to thermal spraying comprising putting a powdered metallic material, etc., into a molten state, and blowing the molten metallic material, etc., on a worked surface with a flame, no difficulty concerning thick film formation and electrochemical affinity arises. However, the thermal spraying inherently has operational problems as shown in (A) to (B) below.
(A) In many cases, a worked surface of a machine part must be surface roughened, in advance, by a procedure such as shot blasting before thermal spraying. Such pretreatment is time-consuming, and the hard particles (auxiliary material) used for surface roughening are costly. The surface roughening therefore consumes time and raises the cost of the thermal spraying. Moreover, much noise is produced during surface roughening to damage the working environment.
(B) During thermal spraying, portions which are not to be thermally sprayed must be masked, which further consumes time and raises the cost.

Although such a thermal spraying technology has general applicability as a technology for forming a metallic film on a metallic worked surface, it has many problems in that it damages the working environment at working sites, consumes time and labor and raises the cost.

An object of the present invention is to provide a method of forming a film on machine parts which is excellent in general applicability as a metallic material film-forming technology on the worked surface of machine parts and is capable of maintaining an excellent working environment at working sites and is effective in saving labor and time and cutting the cost of the work.

The invention of claim 1 (a method of forming a film in a machine part) comprises preparing a supply composed of a metallic material softer than at least the worked surface of a machine part, and pressure welding the supply to the worked surface of the machine part while the machine part and the supply are being relatively rotated, whereby part of the metallic material forming the supply is transferred to the worked surface of the machine part to form a film composed of the metallic material. According to the method, part of the metallic material which is softer than the worked surface of a machine part can be suitably transferred to the worked surface from the supply side to the worked surface, and a metallic film having a desired thickness can be formed on the worked surface of the machine part simply and at low cost.

The invention of claim 2 is a method of forming a film on a machine part according to claim 1, wherein the machine part is a rotor capable of rotating around a single axis, and the worked surface of the rotor is an annular or circular surface centered on the single axis and crossing the single axis at right angles. When the machine part which is a worked material is such a rotor and the worked surface is an annular or circular surface crossing the rotational axis at right angles, the gist of the procedure of the present invention "pressure welding the supply to the worked surface of the machine part while the machine part and the supply are being relatively rotated" can be extremely smoothly conducted.

The invention of claim 3 is a method of forming a film in a machine part according to claim 2, wherein an end coming into contact with the machine part has an end shape corresponding to the annular or circular worked surface of the machine part. According to the constitution, the end (annular or circular) can be thoroughly surface contacted with the annular or circular worked surface of the machine part during pressure welding. That is, the end of the supply can be instantaneously pressure welded to the whole of the worked surface. Consequently, the film thus formed on the worked surface shows no local variation in thickness, and a metallic material film having a uniform thickness can be formed on the entire worked surface.

The invention of claim 4 is a method of forming a film in a machine part, wherein a film is formed on a worked surface of a machine part which surrounds a single axis and simultaneously crosses the single axis at right angles, the method comprising the steps of: A) preparing a supply composed of a metallic material softer than at least the worked surface of the machine part and at the same time having an annular end corresponding to the annular worked surface; B) relatively rotating the machine part and the supply in a state in which the axis of the machine part and that of the supply are made to agree with each other while the worked surface of the machine part and the end of the supply are being separately opposed; C) contacting the worked surface of the machine part with the end of the supply while the relative rotation in the step B is being maintained, and applying a given pressure during the contact; and D) disconnecting the supply from the machine part after the lapse of a given time, both having been contacted with each other in the step C, and restoring the step to the stand-by condition in the step B. The most preferred constituent features are selected from the modes of the invention in claims 1 to 3, and are intended to be made definite in claim 4 as a technical idea. The technological significance therefore conforms to claims 1 to 3.

The invention of claim 5 is a method of forming a film in a machine part according to claim 4, wherein a sequence of the steps B, C and D in claim 4 are defined to be one cycle, and a plurality of the cycles are repeated. The advantage or necessity of repeating the cycle of pressure welding and stand-by condition (non-pressure welding) is based on the fact that the supply is formed from a metallic material softer than at least the worked surface of the machine part which is a worked material. That is, when the welding time becomes excessively long, there is the possibility that the relatively soft supply may be deformed or the metallic material itself may be physically changed (converted) due to the influence of load torque and frictional heat. Accordingly, it is preferred to adopt the procedure of repeating the pressure welding and stand-by condition in a sense that an obstacle in the way of forming a film having a desired thickness and desired physical properties is avoided.

Claims 6 to 7 are intended to restrict the constitution of the present invention to the most preferred mode which became clear at the time of filing the application. That is, the invention of claim 6 is the method of forming a film in a machine part according to claim 1 or 4, wherein the metallic material forming the supply has a melting point lower than that of the material forming the machine part. Moreover, the invention of claim 7 is the method of forming a film in a machine part according to claim 1 or 4, wherein the material forming the machine part is an iron series material, and the metallic material forming the supply is an aluminum series material.

The invention of claim 8 is the method of forming a film in a machine part according to claim 1 or 4, wherein the machine part is restricted to a swash plate used in a swash plate type of compressor. In addition, more preferably, the worked surface of the swash plate regarded as a machine part is a sliding contact surface with shoes. The method of claim 8 has an extremely excellent suitability as a method of forming a film on the swash plate.

### DESCRIPTION OF PREFERRED EMBODIMENTS

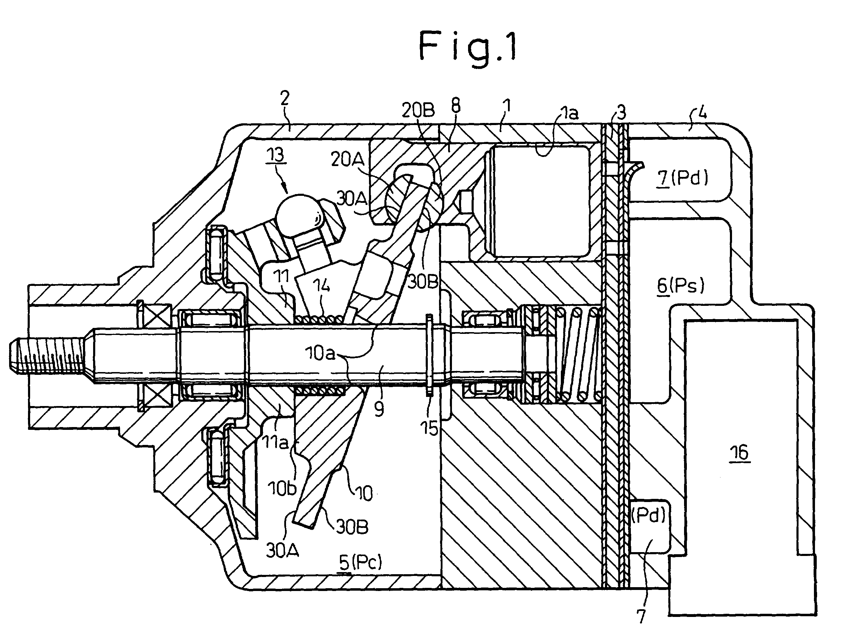

First, one embodiment of a volume-variable swash plate type of compressor, which is the object of the present invention, will be briefly explained. As shown in Fig. 1, the swash plate type of compressor is provided with a cylinder block 1, a front housing 2 which is joined to the front end of the cylinder block 1 and a rear housing 4 which is joined to the rear end of the cylinder block 1 through a valve plate 3. These are mutually joined together with a plurality of through bolts (omitted in the figure) to form the housing of the compressor. The interior of the housing is divided into a crankcase 5, an inlet chamber 6 and an outlet chamber 7. A plurality of cylinder bores 1a (only one being shown) are formed in the cylinder block 1. A single head piston 8 is reciprocatively housed in each bore 1a. The inlet chamber 6 and the outlet chamber 7 are capable of selectively communicating with each bore 1a through flapper valves provided to the valve-formed plate 3. A drive shaft 9 is rotatably supported in the crankcase 5, and a swash plate 10 regarded as a cam plate is housed therein. A shaft bore 10a is penetratively provided to the central portion of the swash plate 10, and the drive shaft 9 is inserted through the shaft bore 10a. The swash plate 10 is movably connected to the drive shaft 9 through a hinge mechanism 13 and a lug plate 11, and is movable with an inclination to the drive shaft 9 while synchronously rotating with the drive shaft 9 and sliding in the axial direction of the drive shaft 9; a peripheral portion of the swash plate 10 is freely slidably retained at an end of each piston 8 through a pair of shoes 20A, 20B, whereby all the pistons 8 are movably connected to the swash plate 10. When the swash plate 10 inclined at a given angle is rotated together with the drive shaft 9, each piston 8 is reciprocated with a stroke in accordance with an inclination angle of the swash plate. In each cylinder bore 1a, inlet and compression of a coolant gas from the inlet chamber 6 (region of inlet pressure Ps), and outlet of the compressed coolant gas to the outlet chamber 7 (region of outlet pressure Pd) are consecutively repeated.

The swash plate 10 is urged toward a position (inclination angle-decreasing position) toward the cylinder block 1 with a spring 14 (a spring for urging the swash plate toward its minimum inclination angle position). However, the minimum inclination angle θₘᵢₙ (e.g., 3 to 5°) of the swash plate 10 is restricted by regulating the inclined motion and the sliding of the swash plate 10 toward its inclination angle-decreasing position by, for example, a circlip 15 fixed on the drive shaft 9. On the other hand, the maximum inclination angle θₘₐₓ of the swash plate 10 is restricted by, for example, the butting of a counterweight portion 10b of the swash plate 10 with a defining portion 11a of the lug plate 11. The inclination angle of the swash plate 10 is determined on the basis of a mutual balance of moments such as a moment of rotary motion based on the centrifugal force during the rotation of the swash plate, a moment given by the spring force based on the addition action of the spring 14 (spring for urging the swash plate toward its minimum inclination-angle position), a moment given by the reciprocative inertial force of the piston and a moment given by a gas pressure. The moment given by a gas pressure is a moment generated on the basis of the mutual relationship between the inner pressure of the cylinder bore and the inner pressure (crank pressure Pc) of the crankcase 5 which corresponds to the rear pressure of the piston, and acts either to decrease the inclination angle, or to increase it, in accordance with the crank pressure Pc. In the swash type of compressor in Fig. 1, the moment given by a gas pressure is suitably changed by adjusting the crank pressure Pc using a displaced control valve 16 not shown so that the inclination angle of the swash plate 10 can be set at a freely selected angle θ between the minimum inclination angle θₘᵢₙ and the maximum inclination angle θₘₐₓ.

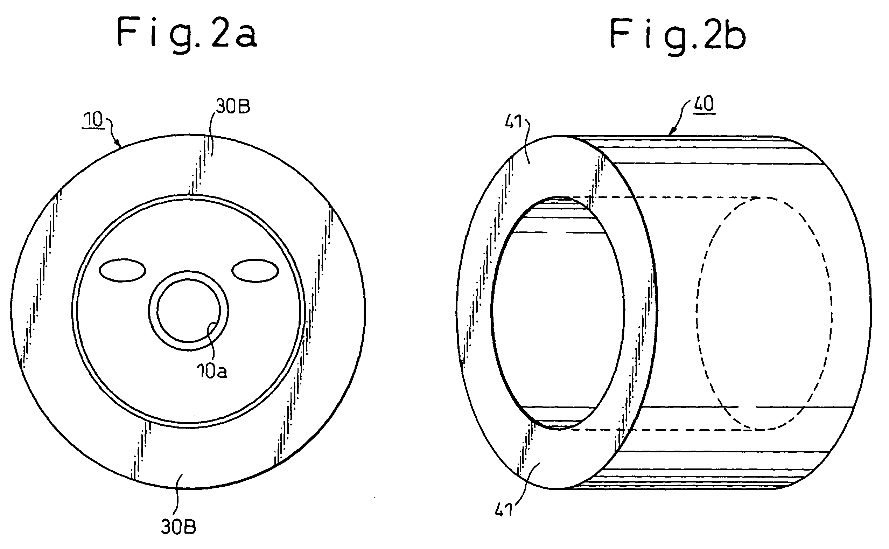

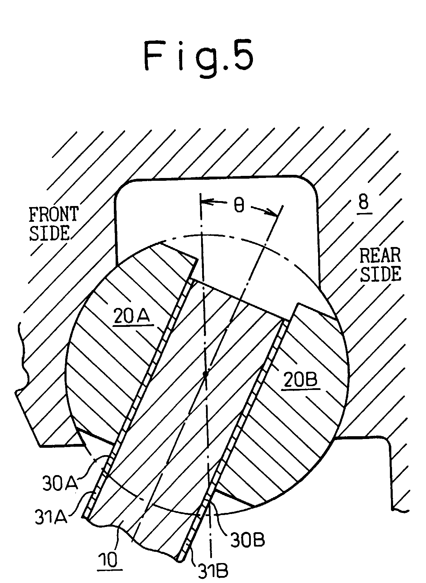

The machine part of such a compressor on which a film is to be formed is, for example, the swash plate 10. As shown in Fig. 1, Fig. 2a and Fig. 2b, annular sliding contact surfaces 30A, 30B are formed on the front and the rear side of the peripheral portion of the swash plate 10, respectively. The front and the rear side of the annular sliding contact surfaces 30A, 30B are slidably contacted with the pair of shoes 20A, 20B, respectively. In order to properly generate a moment of rotary motion based on the centrifugal force during the rotation of the swash plate, a relatively heavy iron series material such as a cast iron of FCD700 is used for the swash plate 10. On the other hand, the mechanical strength, etc., of the shoes 20A, 20B must be taken into consideration, and an iron type material such as a bearing steel is similarly used therefor. Since sliding contact of two members (the swash plate and the shoes in the present case) formed from similar metallic materials, respectively, under severe conditions, produces seizure caused by a so-called alloying phenomenon, films 31A, 31B are formed at least on the sliding contact surfaces 30A, 30B, respectively, of the swash plate 10 to improve the contact slidability with the shoes as shown in Fig. 5, in the present embodiment. The sliding contact surfaces 30A, 30B of the swash plate 10 therefore become worked surfaces in the present embodiment.

The films 31A, 31B are formed from a metallic material differing from the iron series of material forming the base material of the swash plate 10 and the shoes 20A, 20B. Examples of the metallic material forming the films 31A, 31B include an aluminum alloy containing silicon and an intermetallic compound of aluminum and silicon (both being referred to as Al-Si series metallic materials hereinafter). An Al-Si series metallic material regarded as an aluminum series material variously changes its physical properties such as hardness and melting point in accordance with the silicon content. The silicon content of the Al-Si series metallic material used herein is from 15 to 20 wt%, preferably about 17 wt%. Formation of the films 31A, 31B formed from such an Al-Si series metallic material not only prevents seizure caused by the alloying phenomenon but also improves the contact slidability between the swash plate 10 and the shoes 20A, 20B. That is, formation of the films 31A, 31B ensures lubricity to a certain degree between the swash plate 10 and the shoes 20A, 20B even in an oilless environment. In addition, the iron series material used for the swash plate 10 and the shoes 20A, 20B is very hard and has a melting point as relatively high as at least one thousand and several hundred degrees, whereas the Al-Si series metallic material forming the films 31A, 31B is relatively soft compared with the iron series of material and has a melting point of about 600 to 700°C which is low compared with an iron series material. Differences in the physical properties between the Al-Si series material and the iron series material undoubtedly contribute to the improvement of the contact slidability. In addition to the improvement, the differences in the physical properties therebetween have an important significance when a film formation method, as explained below, is selected.

### [Example]

Next, procedures for forming a film on a sliding contact surface 30B (worked surface) on the rear side of a swash plate 10 regarded as a machine part will be specifically explained.

First, in a preparatory step, a supply 40 is prepared as shown in Fig. 2a and Fig. 2b. The supply 40 as a whole is formed from an Al-Si series metallic material, and has a thick cylindrical shape. One end 41 of the thick cylindrical supply 40 is an annular one corresponding to an annular sliding contact surface 30B of the swash plate 10. As a result, when the end 41 of the supply 40 is contacted with the sliding contact surface 30B of the swash plate, the entire sliding contact surface 30B can be covered with the end 41.

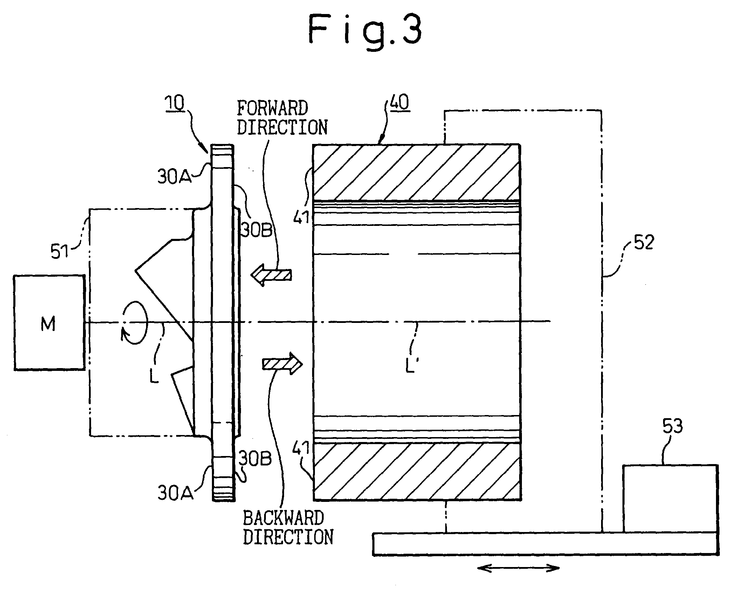

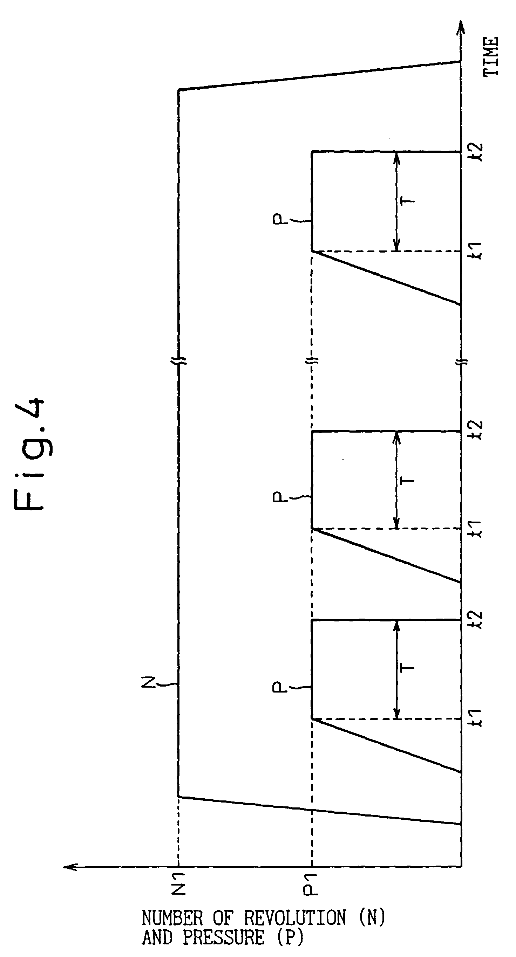

As a second step, the swash plate 10 is set in a rotation holding mechanism 51 (schematically shown by a two-dot chain line), and the supply 40 is set in a sliding holding mechanism 52 (schematically shown by a two-dot chain line), as shown in Fig. 3. The rotation holding mechanism 51 is movably connected to a motor M, which rotates the held swash plate 10 around the axis L by its driving force. When the swash plate 10 is set in the rotation holding mechanism 51, the annular sliding contact surface 30B surrounds the axis L and at the same time crosses the axis L at right angles. Moreover, the sliding contact surface 30B is opposed to the end 41 of the supply 40 while being separated therefrom. On the other hand, the sliding holding mechanism 52 is movably connected to a longitudinal sliding means 53, and the held supply 40 is made to approach, press weld to, and disconnect from the swash plate 10 by the motion of the longitudinal sliding means 53. The axis L' of the thick cylindrical supply 40 is made to agree with the axis L when the supply is set in the sliding holding mechanism 52, and the end 41 becomes capable of being exactly contacted with the sliding surface 30B of the swash plate 10 when the supply 40 is advanced toward the swash plate 10. when the swash plate 10 and the supply 40 are set in the respective mechanisms 51, 52, the swash plate 10 is rotated at a given number of revolutions per min. N1 (e.g., at least 1,800 rpm) by the motor M and the rotation holding mechanism 51 (refer to Fig. 4). That is, a relative speed difference in the peripheral direction is made between the swash plate 10 and the supply 40 in a static state, and a relative rotation is produced around the axis L, L' common to both of them.

As a third step, the supply 40 is advanced (moved) toward the swash plate 10 together with the sliding holding mechanism 52 by the longitudinal sliding means 53 while the swash plate 10 is being rotated. Even after the end 41 is contacted with the sliding contact surface 30B, the supply 40 is pressed to the sliding contact surface 30B, whereby the pressing force of the end 41 of the supply against the sliding contact surface 30B of the swash plate is increased and made to reach (at the moment t1 in Fig. 4) a given pressure P1 (e.g., 5 kgf/mm²). That is, the end 41 of the supply is pressure welded to the sliding contact surface 30B of the swash plate at a given pressure P1.

As a fourth step, when the pressing force of the supply end 41 of the supply against the sliding contact surface 30B of the swash plate reaches the given pressure P1, the given pressure P1 is maintained for a predetermined period of time T (e.g., 5 to 6 sec); after the lapse of the predetermined period of time T (at the moment t2 in Fig. 4), the supply 40 is allowed to recede (disconnect), together with the sliding holding mechanism 52, from the swash plate 10, whereby the step is returned to the stand-by condition in the second step to finish one cycle of pressure welding.

Thereafter, a sequence of the following steps (second to fourth step) is repeated in a plurality of cycles: the rotary connect step after the stand-by step and the disconnection step after the pressure welding step. As a result, a film 31B formed from an Al-Si series metallic material and having a thickness (e.g., 70 to 100 µm) which is equal to a necessary thickness (e.g., 50 µm) plus a shaving margin (e.g., 20 to 50 µm) is formed. The thickness of the film 31B is adjusted by polishing (post-working) the film formed by the method.

In addition, the film 31A formed from the Al-Si series metallic material is also formed on the sliding contact surface 30A on the front side of the swash plate 10 by the same procedure using the supply 40 as mentioned above.

In the present embodiment, during the formation of the films 31A, 31B on the respective sliding contact surfaces 30A, 30B regarded as worked surfaces, stepwise procedures wherein the pressure welding time T at a time in one cycle of pressure welding and disconnection of the supply 40 is restricted to, for example, 5 to 6 sec, and the cycle is repeated a plurality of times are taken to produce films having a desired thickness. The reasons for taking the stepwise procedures are as explained below. Since the metallic material forming the supply 40 is relatively soft and has a low melting point, compared with the machine part (swash plate 10) which is a worked material, the supply 40 tends to be deformed due to the influence of the load torque and frictional heat when the pressure welding time T becomes excessively long, and there is the possibility that ideal surface contact between the end 41 and the worked surface may be hindered; moreover, when the supply 40 is left at high temperatures over a long period of time, there is the possibility that the crystal structure, etc., of the Al-Si metallic material may be unexpectedly changed, and that the film formed on the sliding contact surface may not have the same crystal structure as the metallic material selected as the material to be used and become a material different from the selected one, which results in that the expected effects cannot be achieved. In this respect, the unexpected situations as explained above (deformation of the supply and changes in the crystal structure, etc.) are avoided in the present embodiment by determining the pressure welding time T at each cycle to be relatively short, as explained above, and making a pause in the pressure welding between the cycles (between the moment t2 in the prior cycle and the moment t1 in the subsequent cycle) to make the number of pressure welding steps plural.

According to the present embodiment, the following effects can be obtained.
A) According to the method of forming a film in the present embodiment, the films 31A, 31B composed of an Al-Si series metallic material can be efficiently formed on the sliding contact surfaces 30A, 30B of the swash plate 10 in a short period of time by simple procedures.
B) The technology of the present invention differs from the conventional thermal spraying technology in that specific pretreatment of the worked surface of the swash plate 10 is not required. Moreover, specific masking or the like, is not required by making the end shape of the supply 40 correspond to the shape of the worked surface. As a result, the labor and time necessary for the work can be greatly saved, and the cost of the work can be significantly cut.
C) Little noise is produced during pressure welding the supply 40 to the swash plate 10. Accordingly, there is no fear that the working environment may be damaged.
D) Formation of the films 31A, 31B on the worked surfaces in the method is by physical adhesion by pressure welding transfer, and a strong chemical affinity is not required. The method is therefore excellent in general applicability as a film-formation technology.
E) According to the method, the adhesion of the films 31A, 31B to the worked surfaces is significantly improved. Although the reasons are not clear, the improvement is estimated to be achieved because partial diffusion of the metallic material on the side of the supply 40 into the swash plate 10 takes place at an atomic level, by the influence of the pressing pressure during pressure welding the supply 40 to the swash plate 10 and the frictional heat thus generated, to form a micro-diffusion layer in the contact region between the film and the worked surface of the swash plate 10.
   In addition to the embodiment of the present invention mentioned above, the embodiment may also be changed as explained below.
F) Although the supply 40 is longitudinally slid while the swash plate 10 is being rotated in the embodiment mentioned above, the swash plate 10 can also be longitudinally slid while the supply 40 is being rotated to form a film. Moreover, the swash plate 10 and the supply 40 may also be rotated at respective different rotational speeds to make a difference in relative rotational speeds between them, followed by mutually pressing them together.
G) The portions to which the film-formation method of the present invention is applicable are not restricted to the sliding contact surfaces 30A, 30B of the swash plate 10, but a similar Al-Si series metal film may also be formed on the flat plane sides of the shoes 20A, 20B to be contacted with the respective sliding contact surfaces of the swash plate by the method of the present invention.
H) The method of the present invention may also be used during the formation of a film in the end portion of each of the scroll members in a scroll type of compressor provided with a fixed scroll member and a movable scroll member.

Examples of technological ideas other than those disclosed in each of the claims mentioned above are shown below.
a) The film composed of a metallic material and formed on the worked surface of the machine part in the method of forming a film in the machine part according to any one of claims 1 to 8 is intended to improve the contact slidability of the machine part and other parts.
b) The methods of forming a film according to claims 1 to 8 should be seen as methods of producing the swash plate of a swash plate type of compressor, in relation to claim 8. The method of the present invention has an extremely excellent suitability as a method of producing a swash plate having a film.

As explained above in detail, the method according to the present invention is excellent in general applicability as a technology for forming a metallic material film on the worked surface of a machine part, and at the same time shows exellent effects of being capable of maintaining an excellent working environment in working sites, saving the labor and time of working and effectively cutting the cost.

## Claims

1. A method of forming a film on a machine part, comprising preparing a supply composed of a metallic material softer than at least the worked surface of a machine part, and pressure welding the supply to the worked surface of the machine part while the machine part and the supply are being relatively rotated, whereby part of the metallic material forming the supply is transferred to the worked surface of the machine part to form a film composed of the metallic material.

2. The method of forming a film on a machine part according to claim 1, wherein the machine part is a rotor capable of rotating around a single axis, and the worked surface of the rotor is an annular or circular surface centered on the single axis and crossing the single axis at right angles.

3. The method of forming a film on a machine part according to claim 2, wherein the end to come in contact with the machine part has an end shape corresponding to the annular or circular worked surface of the machine part.

4. A method of forming a film on a machine part, wherein a film is formed on a worked surface of a machine part which surrounds a single axis and simultaneously crosses the single axis at right angles, the method comprising the steps of:
A) preparing a supply composed of a metallic material softer than at least the worked surface of the machine part and at the same time having an annular end corresponding to the annular worked surface;
B) relatively rotating the machine part and the supply in a state in which the axis of the machine part and that of the supply are made to agree with each other while the worked surface of the machine part and the end of the supply are being separately opposed;
C) contacting the worked surface of the machine part with the end of the supply while the relative rotation in the step B is maintained, and applying a given pressure during the contact; and
D) disconnecting the supply from the machine part, after the lapse of a given time, both having been contacted with each other in the step C, and restoring the step to the stand-by condition in the step B.

5. The method of forming a film on a machine part according to claim 4, wherein a sequence of the steps B, C and D in claim 4 are defined to be one cycle, and a plurality of the cycles are repeated.

6. The method of forming a film on a machine part according to any one of claims 1 to 5, wherein the metallic material forming the supply has a melting point lower than that of the material forming the machine part.

7. The method of forming a film on a machine part according to any one of claims 1 to 6, wherein the material forming the machine part is an iron series material, and the metallic material forming the supply is an aluminum series material.

8. The method of forming a film on a machine part according to any one of claims 1 to 7, wherein the machine part is a swash plate used in a swash plate type compressor.
